# EUROPÄISCHE PATENTANMELDUNG

(11) **EP 2 251 954 A1**
(43) Veröffentlichungstag der Anmeldung: **17.11.2010**
(21) Anmeldenummer: 09006444.5
(22) Anmeldetag: 13.05.2009
(51) Int. Cl.: H02J 7/00, H02J 7/02

(54) **Induktionsladevorrichtung**

(71) Anmelder: Braun GmbH, 61476 Kronberg/Taunus (DE)
(72) Erfinder: Jung, Philipp, 64347 Grieheim (DE); Hohmann, Thomas, 63571 Gelnhausen (DE); Hilscher, Alexander, 61440 Oberursel (DE); Lepper, Joachim, 61250 Usingen (DE); Ziemann, Winfried, 61440 Oberursel (DE); Trawinski, Peter, 64331 Weiterstadt (DE); Schaefer, Norbert, 60320 Frankfurt/Main (DE); Faranda, Leo, 63110 Rodgau (DE)
(74) Vertreter: Schneider, Stefan Michael

(57) **Zusammenfassung**

Die Erfindung betrifft eine Induktionsladeeinrichtung zum Laden eines Energiespeichers einer mobilen elektrischen Vorrichtung mit einer Spule zur Energieübertragung und einer Steuerung für die Energieübertragung. Um eine Induktionsladevorrichtung der vorgenannten Art bereitzustellen, die sich dadurch auszeichnet, dass sie besonders wenig Energie verbraucht und zuverlässig das Vorhandensein der mobilen elektrischen Vorrichtung erkennt, wird erfindungsgemäß vorgeschlagen, dass die Steuerung mit einem Kondensator mit einer veränderbaren Kapazität verbunden ist, wobei der Kondensator so eingerichtet ist, dass sich seine Kapazität in Abhängigkeit davon ändert, ob die mobile elektrische Vorrichtung in einer Ladeposition angeordnet ist oder nicht.

## Beschreibung

### Gebiet der Erfindung

Die vorliegende Erfindung betrifft eine Induktionsladevorrichtung zum Laden eines Energiespeichers einer mobilen elektrischen Vorrichtung mit einer Spule zur Energieübertragung und einer Steuerung für die Energieübertragung.

Die vorliegende Erfindung betrifft darüber hinaus ein System mit einer Induktionsladevorrichtung und einer mobilen elektrischen Vorrichtung sowie ein Verfahren zum Laden eines Energiespeichers einer mobilen elektrischen Vorrichtung mittels einer Induktionsladevorrichtung.

### Hintergrund der Erfindung

Derartige Energieübertragungssysteme werden unter anderem zum Aufladen von Akkumulatoren und anderen Speichern für elektrische Energie in mobilen elektrischen Vorrichtungen eingesetzt. Mobile elektrische Vorrichtungen können beispielsweise elektrische Zahnbürsten, elektrische Rasierer, elektrische Handwerkzeuge, elektrische Küchengeräte, elektrische Handsauger, mobile medizinische Geräte, Mobiltelefone oder mobile Messgeräte aller Art sein.

Eine kabellose Energieübertragung kann insbesondere durch induktive Energieübertragung realisiert werden. Dabei werden eine Magnetspule im Ladeteil und eine Magnetspule im mobilen elektrischen Gerät magnetisch reversibel gekoppelt. Auf diese Weise entsteht ein teilbarer Transformator, von dem je eine Spule im Ladeteil und eine Spule im mobilen elektrischen Gerät angeordnet ist. Ein Wechselstrom durch die Spule in der Induktionsladevorrichtung kann im mobilen elektrischen Gerät als Leistung aus der Spule entnommen werden.

Bei einer solchen Energieübertragung verbraucht das Ladeteil auch dann Primärenergie, wenn keine Energie auf ein Handgerät übertragen wird. Dies ist in Bezug auf Maßnahmen zur Energieeinsparung nachteilig.

Es wurden daher Systeme aus Induktionsladevorrichtungen und mobilen elektrischen Vorrichtungen entwickelt, bei denen die Anwesenheit der mobilen elektrischen Vorrichtung an der Induktionsladevorrichtung erkannt wird. Bei Abwesenheit der mobilen elektrischen Vorrichtung stellt die Induktionsladevorrichtung den Versuch der Energieübertragung ein und minimiert so den Energieverbrauch.

Zur Erkennung der Anwesenheit einer mobilen elektrischen Vorrichtung sind aus dem Stand der Technik verschiedene Vorrichtungen und Verfahren bekannt. Beispielsweise beschreibt die

EP 0 357 829 ein System, bei dem die Anwesenheit der mobilen elektrischen Vorrichtung dadurch erkannt wird, dass von der elektrischen Vorrichtung über eine Leuchtdiode Signale an eine Empfängerdiode in der Induktionsladevorrichtung übertragen werden. Erfasst das System ein Fehlen der mobilen elektrischen Vorrichtung an der Empfängerdiode, so stellt die Induktionsladevorrichtung die Ladetätigkeit ein und schaltet ihre Stromversorgung ab. Außer der optischen Erkennung sind das Schalten von REED-Schaltern oder Mikroschaltern mit Magneten oder Elektromagneten in der mobilen elektrischen Vorrichtung sowie eine Kombination aus Magnet und Hallelement beschrieben.

In der US 2004/0004460 ist ein System beschrieben, in dem eine zentrale Steuereinheit die Ladetätigkeit von mehreren Induktionsladevorrichtungen steuert. Die Übertragung von Daten ist durch die Übertragung von optischen Signalen von der mobilen elektrischen Vorrichtung an die Induktionsladevorrichtung realisiert. Außerdem kann die zentrale Steuereinheit Daten mit den mobilen elektrischen Vorrichtungen über eine Funkverbindung austauschen.

In der DE 197 41 279 ist ein System beschrieben, bei dem die Übertragung von Energie von der Induktionsladevorrichtung an die mobile elektrische Vorrichtung durch Veränderungen an elektrischen Bauelementen in der Ansteuerschaltung für die Energieübertragungsspule überwacht wird. Bestimmte Schwellenwerte für Spannungen an entsprechenden Bauelementen legen die Aufnahme oder Stilllegung der Ladetätigkeit fest.

Bekannt ist auch, die Energieübertragungsspule in einen Schwingkreis einzubinden, dessen Frequenz sich ändert, wenn die mobile elektrische Vorrichtung in ihrer Ladeposition ist. Diese Frequenzänderung kann zur Erfassung der Anwesenheit herangezogen werden.

In der GB 233 0 461 ist ein weiteres System beschrieben, bei dem die Anwesenheit der mobilen elektrischen Vorrichtung an der Induktionsladevorrichtung durch eine optische Kommunikation zwischen einem Licht aussendenden Element und einem lichtempfangenen Element überwacht wird.

In der WO 03/054825 ist ein System beschrieben, bei dem die Steuerung der Ladetätigkeit von Bauteilen in der Ansteuerungsschaltung für die induktive Koppelspule gesteuert wird. Eine ähnliche Vorrichtung ist in der DE 41 00 2 72 beschrieben.

In der WO 98/23020 ist ein weiteres System beschrieben, bei dem eine Ein- und Ausschaltvorrichtung für die Energieübertragung durch die Anwesenheit eines Schlüssels in einem Schlüssel-Schloss-System erkannt wird, wobei der Schlüssel oder das Schloss in der mobilen elektrischen Vorrichtung oder der Induktionsladevorrichtung angeordnet sind. Es ist auch eine optische Übertragung eines digitalen Schlüssels beschrieben.

Vielen optischen Anwesenheitserkennungssystemen ist gemeinsam, dass die mobile elektrische Vorrichtung relativ viel Strom aufwenden muss, um ihre Anwesenheit zu signalisieren. Da gerade in der mobilen elektrischen Vorrichtung nur begrenzt Batterieenergie zur Verfügung steht oder die Ladevorrichtung weiter belastet wird, ist dies nachteilig. Zudem sind die optischen Einrichtungen gegenüber Verschmutzung empfindlich. Eine sichere Signalisierung kann daher nicht immer gewährleistet werden.

Nachteilig an der Erkennung der Anwesenheit der mobilen elektrischen Vorrichtung durch probeweises Übertragen von Energie und Messung von Eigenschaften der Ansteuerungsschaltung für die Energieübertragung ist, dass dieses Vorgehen ebenfalls energieaufwändig ist, da probeweise Energie bereitgestellt wird.

### Zusammenfassung der Erfindung

Aufgabe der vorliegenden Erfindung gegenüber dem genannten Stand der Technik ist es daher, den für die Anwesenheitserkennung erforderlichen Energieverbrauch zu senken und die Fehlersicherheit der Anwesenheitserkennung zu verbessern.

Erfindungsgemäß wird diese Aufgabe durch eine Induktionsladevorrichtung zum Laden eines Energiespeichers einer mobilen elektrischen Vorrichtung gelöst, mit einer Spule zur Energieübertragung und einer Steuerung für die Energieübertragung, wobei die Steuerung mit einem Kondensator mit einer veränderbaren Kapazität verbunden ist, und wobei der Kondensator so eingerichtet ist, dass sich seine Kapazität in Abhängigkeit davon ändert, ob die mobile elektrische Vorrichtung in einer Ladeposition angeordnet ist oder nicht.

Die Verwendung der kapazitiven Messtechnik zur Anwesenheitserkennung einer mobilen elektrischen Vorrichtung löst die oben genannte Aufgabe, da sie mit sehr wenig Energie auskommt und eine sichere Erkennung ermöglicht. Die Kapazität eines Kondensators der Induktionsladevorrichtung wird dazu von der mobilen elektrischen Vorrichtung beeinflusst, sodass ihre Anwesenheit in der Ladeposition oder ihr Fehlen detektierbar ist.

Eine Anordnung der mobilen elektrischen Vorrichtung in einer Ladeposition im Sinne der vorliegenden Anmeldung bedeutet, dass im Ladebetrieb das elektromagnetische Feld der Spule zur Energieübertragung der Induktionsladevorrichtung auch eine Spule aufseiten der mobilen elektrischen Vorrichtung durchsetzt, sodass Energie von der Spule der Induktionsladevorrichtung (Sendespule) zu der Spule der mobilen elektrischen Vorrichtung (Empfängerspule) übertragbar ist. Dabei liegt eine Anordnung in der Ladeposition im Sinne der Erfindung bereits dann vor, wenn in einem Zustand bei deaktiviertem Ladebetrieb die mobile elektrische Vorrichtung so in der Umgebung der Induktionsladevorrichtung angeordnet ist, dass eine elektromagnetische Kopplung zwischen der Spule der Induktionsladevorrichtung und der Spule der mobilen elektrischen Vorrichtung möglich ist.

Im Allgemeinen ist für eine solche Kopplung bzw. Anordnung in der Ladeposition eine enge räumliche Nähe der Spulen von Induktionsladevorrichtung und mobiler elektrischer Vorrichtung zueinander erforderlich.

Ein Energiespeicher der mobilen elektrischen Vorrichtung kann in einer Ausführungsform jede Art von Akkumulator, d.h. einer wiederaufladbaren Batterie, eine Speicherkapazität oder jede andere Einrichtung zur Speicherung elektrischer Energie sein.

In einer Ausführungsform ist dabei die Induktionsladevorrichtung so ausgestaltet, dass die mobile elektrische Vorrichtung mechanisch in oder an ihr aufnehmbar ist. Die Kapazität des Kondensators hängt dann davon ab, ob die mobile elektrische Vorrichtung mechanisch in oder an der Induktionsladevorrichtung aufgenommen ist oder nicht.

Um eine mechanische Aufnahme der mobilen elektrischen Vorrichtung an der Induktionsladevorrichtung zu ermöglichen, weist die Induktionsladevorrichtung in einer Ausführungsform ein Gehäuse mit einer Einrichtung auf, welches zur Aufladung der mobilen elektrischen Vorrichtung in eine komplementäre Einrichtung am Gehäuse der mobilen elektrischen Vorrichtung eingreift, oder mit einer Einrichtung, in welche die mobile elektrische Vorrichtung bzw. ihr Gehäuse eingreift und so in bzw. an der Induktionsladevorrichtung gehalten wird. In einer Ausführungsform ist das Gehäuse der Induktionsladevorrichtung im Wesentlichen ringförmig ausgestaltet, wobei die mobile elektrische Vorrichtung bzw. ihr Gehäuse in dem Ring aufnehmbar ist.

In einer Ausführungsform ist die Steuerung so eingerichtet, dass sie im Betrieb der Vorrichtung die Kapazität des Kondensators erfasst und die Energieübertragung in Abhängigkeit von der Kapazität des Kondensators steuert.

Die Steuerung ist vorzugsweise so gestaltet, dass ihr ein Messergebnis einer Kapazitätsmessung des Kondensators zur Verfügung steht, anhand dessen sie entscheidet, ob die

Energieübertragung aktiviert werden soll oder nicht. Die Energieübertragung wird zweckmäßigerweise dann aktiviert, wenn anhand des Messergebnisses erkennbar ist, dass die mobile elektrische Vorrichtung in einer Ladeposition angeordnet ist, d.h., dass sich die mobile elektrische Vorrichtung in der Nähe, an oder in der Induktionsladevorrichtung befindet.

In einer Ausführungsform der Erfindung sind die Elektroden des Kondensators der Induktionsladevorrichtung, als frequenzbeeinflussende Kapazität in einen Schwingkreis oder als Messkapazität in eine Kapazitätsmessschaltung eingebunden oder beeinflussen auf andere Weise einen Zustand einer Schaltung der Steuerung.

In einer weiteren Ausführungsform weist der Kondensator mindestens zwei Elektroden auf, wobei sich zwischen den Elektroden zumindest abschnittsweise ein Dielektrikum erstreckt, dessen Dielektrizitätskonstante durch Ausüben einer mechanischen, elektrischen oder magnetischen Kraft oder durch Einwirken eines Feldes auf das Dielektrikum veränderbar ist, wobei die Kraft oder das Feld davon abhängt, ob die mobile elektrische Vorrichtung in der Ladeposition angeordnet ist oder nicht. Beispielsweise kann durch mechanisches Komprimieren des sich zischen den Platten befindlichen Dielektrikums dessen Dielektrizitätskonstante geändert werden.

Ein Kondensator besteht in seiner einfachsten Ausführungsform aus wenigstens zwei Elektroden, zwischen denen sich ein elektrisches Feld ausbildet, wenn an die Elektroden eine elektrische Spannung angelegt wird. Das elektrische Feld durchsetzt ein nichtleitendes Dielektrikum. Das elektrische Feld kann sich, beispielsweise bei einem Plattenkondensator, im Wesentlichen auf das Volumen zwischen den Elektroden beschränken. Durch andere Geometrien der Elektroden ist es jedoch auch möglich, dass sich das elektrische Feld deutlich von den Elektroden entfernt, beispielsweise, wenn diese als nebeneinanderliegende Platten ausgeführt sind. Das relevante elektrische Feld erstreckt sich dann in einem Bereich in der Größenordnung der Plattenabmessungen auch senkrecht zu der Oberfläche der Platten. Auch in diesem Fall bildet jegliches elektrisch nichtleitende Material, das von den Feldlinien durchsetzt wird, das Dielektrikum des Kondensators. Im Sinne der vorliegenden Anmeldung bezeichnet daher das Dielektrikum des Kondensators alle elektrisch nichtleitenden Materialien, die im Betrieb der Induktionsladevorrichtung vom elektrischen Feld des Kondensators durchsetzt werden. Dazu zählen in Ausführungsformen auch diejenigen Materialien, die sich außerhalb der Induktionsladevorrichtung befinden, insbesondere die Luft in der Umgebung und Elemente oder Abschnitte der mobilen elektrischen Vorrichtung, die in die Umgebung des Kondensators eingebracht werden.

Dadurch, dass voneinander verschiedene Materialien mehr oder weniger in das elektrische Feld des Kondensators eingebracht werden, ändert sich die Kapazität des Kondensators. Dieser Effekt und andere Beeinflussungen der Dielektrizitätskonstanten können für die Erfassung der Anwesenheit der mobilen elektrischen Vorrichtung genutzt werden. Die Dielektrizitätskonstante geht als multiplikativer Faktor in die Kapazität ein, wodurch sich Änderungen der Dielektrizitätskonstanten im Wesentlichen proportional auf die Kapazität auswirken.

In einer Ausführungsform ist das Dielektrikum zwischen den Platten so ausgestaltet, dass es zumindest abschnittsweise austauschbar ist, wobei das sich zwischen den Elektroden befindende Dielektrikum davon abhängt, ob die mobile elektrische Vorrichtung in der Ladeposition angeordnet ist oder nicht.

Dieses Austauschen kann beispielsweise dadurch geschehen, dass in einen Luftspalt zwischen den Platten ein Dielektrikum eingebracht wird. Dabei wird das Dielektrikum Luft durch ein anderes Dielektrikum mit einer von Luft verschiedenen Dielektrizitätskonstante, beispielsweise durch einen Abschnitt eines Gehäuses der mobilen elektrischen Vorrichtung, ersetzt.

Ein solcher Austausch des Dielektrikums zwischen den Platten des Kondensators kann aber auch dadurch erreicht werden, dass ein Block aus zwei dielektrischen Materialien zwischen den Platten verschiebbar angeordnet ist. Das zwischen den Platten befindliche Material weist dann eine mittlere Dielektrizitätskonstante auf, deren Wert davon abhängt, welches Volumen des Zwischenraums zwischen den Platten von welchem Material gefüllt ist.

In einer weiteren Ausführungsform weist der Kondensator mindestens zwei Elektroden auf, deren relative Lage zueinander und/oder deren Form veränderbar ist, wobei die relative Lage und/oder Form davon abhängt, ob die mobile elektrische Vorrichtung in der Ladeposition angeordnet ist oder nicht. Eine Möglichkeit, die Kapazität des Kondensators zu beeinflussen, ist, die Geometrie der Elektroden zu verändern. Dazu kann die relative Lage der Elektroden zueinander verändert werden, z. B. kann der Abstand der Elektroden zueinander verändert werden oder die Elektroden können lateral gegeneinander verschoben werden. Eine weitere Möglichkeit ist die Veränderung der Form der Elektroden, z. B. indem diese gefaltet, entfaltet oder Teile einer Elektrode hintereinander geschoben werden, sodass sich die wirksame Oberfläche verändert. Eine solche Veränderung kann durch die Anwesenheit der mobilen elektrischen Vorrichtung bewirkt werden, die zu diesem Zweck eine besondere Vorrichtung aufweisen kann.

In einer Ausführungsform der Erfindung weist die Induktionsladevorrichtung ein Gehäuse auf, wobei der Kondensator mit mindestens zwei Elektroden und einem Dielektrikum in dem Gehäuse angeordnet ist und wobei das Gehäuse einen verformbaren Abschnitt aufweist, der es ermöglicht, von außen eine Kraft auf das Dielektrikum oder auf zumindest eine der Elektroden auszuüben. Wird in einer solchen Ausführungsform die aufzuladende elektrische Vorrichtung mit dem Gehäuse der Induktionsladevorrichtung in Eingriff gebracht, so drückt beispielsweise ein dafür vorgesehener Abschnitt des Gehäuses der mobilen elektrischen Vorrichtung auf den verformbaren Gehäuseabschnitt der Induktionsladevorrichtung. Die Verformung des Gehäuseabschnitts der Induktionsladevorrichtung wiederum führt beispielsweise zu einer Komprimierung des Dielektrikums des Kondensators oder auch zu einer Änderung des Abstands der Elektroden des Kondensators.

In einer weiteren Ausführungsform weist die Induktionsladevorrichtung ein Gehäuse auf, wobei der Kondensator mit mindestens zwei Elektroden in dem Gehäuse angeordnet ist und wobei das Gehäuse so ausgebildet ist, dass zwischen den Elektroden eine von außen zugängliche Vertiefung vorgesehen ist, in die ein Abschnitt einer mobilen elektrischen Vorrichtung einbringbar ist.

Wird die aufzuladende mobile elektrische Vorrichtung in der Ladeposition angeordnet, so greift beispielsweise ein dafür vorgesehener Abschnitt des Gehäuses der mobilen elektrischen Vorrichtung in die Vertiefung ein und tauscht das in der Vertiefung befindliche Dielektrikum Luft durch das Material des Gehäuseabschnitts der mobilen elektrischen Vorrichtung aus.

In einer weiteren Ausführungsform weist die Induktionsladevorrichtung ein Gehäuse auf und der Kondensator ist als offener Plattenkondensator ausgebildet, wobei sich im Betrieb der Vorrichtung das elektrische Feld des Kondensators zumindest teilweise außerhalb des Gehäuses erstreckt.

Ein offener Plattenkondensator im Sinne der vorliegenden Erfindung bedeutet, dass die Platten, welche die Elektroden des Plattenkondensators bilden, sich nicht parallel in einem Abstand gegenüberstehen, sondern zueinander einen Winkel aufweisen. In einem besonderen Fall können die beiden Platten parallel nebeneinanderliegen, wobei der Winkel 180° beträgt. In einem weiteren besonderen Fall liegen die Elektroden dabei zusätzlich in einer Ebene. In der letztgenannten Anordnung tritt das elektrische Feld senkrecht zu den Elektrodenplatten und erstreckt sich von einer Elektrode zur anderen. Eine Feldlinie, die aus der Mitte der Elektroden austritt, erstreckt sich dabei in einem Bogen mit einem maximalen Abstand zu den Elektroden, der in der Größenordnung der lateralen Ausdehnung einer Elektrode liegt. Durch eine solche Bauform des Kondensators kann erreicht werden, dass das elektrische Feld aus dem Gehäuse der Induktionsladevorrichtung austritt, beispielsweise wenn die beiden Elektroden nebeneinander an der Oberfläche des Gehäuses der Induktionsladevorrichtung oder in einem Abstand darunter angeordnet sind. Wird nun eine mobile elektrische Vorrichtung oder ein Abschnitt einer solchen als Dielektrikum in das elektrische Feld außerhalb der Induktionsladevorrichtung eingebracht, so verändert dies die Kapazität des Kondensators, wodurch die Anwesenheit der mobilen elektrischen Vorrichtung erfasst werden kann.

Die oben genannte Aufgabe wird auch durch ein System aus einer Ausführungsform der zuvor beschriebenen Induktionsladevorrichtung und einer mobilen elektrischen Vorrichtung gelöst, wobei die mobile elektrische Vorrichtung eine Spule zur Energieübertragung und einen mit der Spule verbundenen Energiespeicher aufweist, wobei die mobile elektrische Vorrichtung so in einer Ladeposition positionierbar ist, dass mithilfe der Spulen Energie von der Induktionsladevorrichtung zu dem Energiespeicher der mobilen elektrischen Vorrichtung übertragbar ist und wobei die mobile elektrische Vorrichtung eine Einrichtung aufweist, welche die Kapazität des Kondensators der Induktionsladevorrichtung in Abhängigkeit davon ändert, ob die mobile elektrische Vorrichtung in der Ladeposition angeordnet ist oder nicht.

Mit einer solchen Einrichtung zum Ändern der Kapazität kann die mobile elektrische Vorrichtung der Induktionsladevorrichtung ihre Anwesenheit signalisieren, wenn sie in einer Ladeposition an, in oder in der Nähe der Induktionsladevorrichtung angeordnet ist und/oder in dieser mechanisch aufgenommen ist.

Mobile elektrische Vorrichtungen im Sinne der vorliegenden Anmeldung sind beispielsweise elektrische Zahnbürsten, elektrische Rasierer, elektrische Handwerkzeuge, elektrische Küchengeräte, elektrische Handsauger, mobile medizinische Geräte, Mobiltelefone oder mobile Messgeräte aller Art.

In einer Ausführungsform des Systems weist die mobile elektrische Vorrichtung ein Gehäuse auf, wobei die Einrichtung zur Änderung der Kapazität ein Abschnitt des Gehäuses ist, der, wenn die mobile elektrische Vorrichtung in der Ladeposition angeordnet ist, mit dem flexiblen Abschnitt des Gehäuses der Induktionsladevorrichtung in Eingriff tritt und eine Kraft auf zumindest eine Elektrode oder ein Dielektrikum des Kondensators ausübt.

Zweckmäßigerweise weist die mobile elektrische Vorrichtung in einer Ausführungsform ein Gehäuse auf, wobei die Einrichtung zur Änderung der Kapazität ein Abschnitt des Gehäuses ist, der sich, wenn die Induktionsladevorrichtung in der Ladeposition angeordnet ist, im elektrischen Feld des Kondensators befindet.

In einer weiteren Ausführungsform des Systems weist die mobile elektrische Vorrichtung ein Gehäuse auf, wobei die Einrichtung zur Änderung der Kapazität ein Abschnitt des Gehäuses ist, der, wenn die Induktionsladevorrichtung in der Ladeposition angeordnet ist, in eine Vertiefung in einem Gehäuse der Induktionsladevorrichtung eingreift.

In einer weiteren Ausführungsform weist die Einrichtung zur Änderung der Kapazität einen elektrisch leitfähigen Materialabschnitt als kapazitive Kurzschlusseinrichtung für ein elektrisches Feld des Kondensators der Induktionsladevorrichtung auf. Ist die mobile elektrische Vorrichtung in der Ladeposition angeordnet, so befindet sich der elektrisch leitende Materialabschnitt im elektrischen Feld des Kondensators der Induktionsladevorrichtung.

Die kapazitive Kurzschlusseinrichtung kann beispielsweise aus einem Stück Metall oder aus einem Stück aus einem anderen elektrisch leitfähigen Material bestehen. Wird ein solches elektrisch leitfähiges Material in das Feld eines Kondensators eingebracht, so werden die Feldlinien von der kapazitiven Kurzschlusseinrichtung kurzgeschlossen. Oberflächen der Kurzschlusseinrichtung, die den Elektroden des Kondensators am nächsten liegen, bilden eine oder mehrere Elektroden der kapazitiven Kurzschlusseinrichtung. Diese Elektrode der kapazitiven Kurzschlusseinrichtung bildet jeweils ein elektrisches Feld zu einer der Elektroden des Kondensators aus. Insgesamt werden die Feldlinien dadurch, dass die kapazitive Kurzschlusseinrichtung in das Feld des Kondensators eingebracht wird, um die Länge der kapazitiven Kurzschlusseinrichtung in Feldlinienrichtung verkürzt, was die Kapazität des Kondensators erhöht.

Die bevorzugte Ausführungsform ist dabei ein Plattenkondensator, der im Gehäuse der Induktionsladevorrichtung angeordnet ist. Der elektrisch leitfähige Materialabschnitt ist an oder in der mobilen elektrischen Vorrichtung angeordnet und wird beim Anordnen der mobilen elektrischen Vorrichtung in der Ladeposition beispielsweise in eine Ausnehmung der Oberfläche der Induktionsladevorrichtung zwischen die Platten des Kondensators eingebracht.

In einer weiteren bevorzugten Ausführungsform wird ein offener Plattenkondensator verwendet, der sich vorteilhaft nahe der Oberfläche des Gehäuses der Induktionsladevorrichtung befindet. Die kapazitive Kurzschlusseinrichtung kann in diesem Fall als Blech oder Folie ausgebildet sein, das unter oder an der Oberfläche des Gehäuses der mobilen elektrischen Vorrichtung angeordnet ist. Die kapazitive Kurzschlusseinrichtung ist vorteilhaft nahe der Oberfläche der Induktionsladevorrichtung angeordnet, wenn sich die mobile elektrische Vorrichtung in der Ladeposition befindet. Es bildet sich dann ein elektrisches Feld von einer der beiden Elektroden des Kondensators zu einem ersten Abschnitt der gegenüberliegenden kapazitiven Kurzschlusseinrichtung aus und von einem zweiten Abschnitt der kapazitiven Kurzschlusseinrichtung zu der diesem gegenüberliegenden zweiten Elektrode. Die Kapazität des ursprünglichen Kondensators, der nun aus zwei in Reiche geschalteten Kondensatoren besteht, wird dadurch erheblich erhöht. Dies kann durch eine Kapazitätsmessung zur Erfassung der Anwesenheit der mobilen elektrischen Vorrichtung herangezogen werden.

Die Messung kann dadurch gestört sein, dass beispielsweise auf der Oberfläche der Induktionsladevorrichtung vor den Elektroden ein Feuchtigkeitsfilm vorhanden ist. Dies wirkt durch die elektrische Leitfähigkeit der Feuchtigkeit, wenn die Elektroden elektrisch isoliert ausgeführt sind, ebenso wie eine kapazitive Kurzschlusseinrichtung, sodass das elektrische Feld die mobile elektrische Vorrichtung, die in der Ladeposition angeordnet ist, nicht mehr erreicht, oder bewirkt bei nicht isolierten Elektroden direkt einen klassischen Kurzschluss des Kondensators. Vorteilhaft sind daher die Elektroden des Kondensators senkrecht angeordnet, sodass Nässe von den Elektroden abläuft und keinen Kurzschluss verursacht. Eine weitere Möglichkeit zur Unterbindung einer elektrischen Verbindung durch Feuchtigkeit ist die Ausbildung einer scharfen Stufe zwischen den Elektroden des Kondensators, durch deren kapillare Wirkung ein eventuell vorhandener Feuchtigkeitsfilm unterbrochen wird.

In einer weiteren Ausführungsform weist die Kurzschlusseinrichtung zwei Elektroden auf, die elektrisch leitend miteinander verbunden sind, und die so angeordnet sind, dass sich beim

Laden ein elektrisches Feld zwischen jeweils einer der Elektroden des Kondensators der Induktionsladevorrichtung und einer Elektrode der Kurzschlusseinrichtung ausbildet.

Durch diese Konstruktion können die Elektroden der Kurzschlusseinrichtung, die mit den Elektroden des Kondensators in der Induktionsladevorrichtung korrespondieren, einen größeren Abstand voneinander aufweisen, ohne dass durchgängiges Material zwischen den beiden Elektroden erforderlich wäre. Die Elektroden des Kondensators der Ladevorrichtung können so in einem beliebigen Abstand zueinander angeordnet werden. Dies hat den Vorteil, dass dadurch die Kapazität des Kondensators der Induktionsladevorrichtung als solche verkleinert wird und die Kapazitätsänderung durch das Anordnen der mobilen elektrischen Vorrichtung in der Ladeposition vergrößert wird. Zudem können die Elektroden in der Induktionsladevorrichtung an beliebigen geeigneten Orten angeordnet werden.

In einer weiteren bevorzugten Ausführungsform ist die Impedanz der elektrischen Verbindung zwischen den Elektroden der Kurzschlusseinrichtung einstellbar, um Daten zwischen der mobilen elektrischen Vorrichtung und der Induktionsladevorrichtung zu übertragen. Beispielsweise kann ein Schalter zwischen den beiden Elektroden der Kurzschlusseinrichtung angeordnet werden, auf den digitale Daten aufmoduliert werden. Eine Datenübertragung kann beispielsweise dadurch realisiert werden, dass an die erste und die zweite Elektrode des Kondensators ein Wechselstrom angelegt wird, der im Falle der geschlossenen Verbindung in den Elektroden der Kurzschlusseinrichtung fließen kann, während er nicht fließen kann, wenn der elektronische Schalter geöffnet ist.

Die oben genannte Aufgabe wird auch ein Verfahren zum Laden eines Energiespeichers einer mobilen elektrischen Vorrichtung mithilfe einer Induktionsladevorrichtung mit einer Steuerung für die Energieübertragung gelöst, wobei die Induktionsladevorrichtung in einem ersten Schritt die Kapazität eines Kondensators der Induktionsladevorrichtung, die vom Vorhandensein der mobilen elektrischen Vorrichtung an einer Ladeposition abhängt, erfasst, das Messergebnis in einem zweiten Schritt mit einem Schwellenwert vergleicht und in einem dritten Schritt in Abhängigkeit des Ergebnisses des Vergleichs die Energieübertragung zwischen einer Spule der Induktionsladevorrichtung und der mobilen elektrischen Vorrichtung aktiviert oder deaktiviert.

Auf diese Weise ist es möglich, die Energieübertragung nur dann zu aktivieren, wenn die mobile elektrische Vorrichtung sich in einer Ladeposition an der Induktionsladevorrichtung befindet, was dazu führt, dass sich die Kapazität des Kondensators ändert, verglichen mit einer Situation, in der die mobile elektrische Vorrichtung nicht in der Ladeposition angeordnet ist.

Weitere Vorteile, Merkmale und Anwendungsmöglichkeiten der Erfindung ergeben sich sowohl aus der folgenden Beschreibung bevorzugter Ausführungsformen, als auch aus den dazugehörigen Figuren.

### Kurze Beschreibung der Figuren

- Figur 1: zeigt eine schematische Darstellung einer ersten Ausführungsform eines Sys- tems aus einer Induktionsladevorrichtung und einer mobilen elektrischen Vor- richtung.
- Figur 2: zeigt eine schematische Darstellung einer weiteren Ausführungsform eines Systems aus einer Induktionsladevorrichtung und einer mobilen elektrischen Vorrichtung.
- Figur 3: zeigt eine schematische Darstellung einer alternativen Ausführungsform eines Systems aus einer Induktionsladevorrichtung und einer mobilen elektrischen Vorrichtung.
- Figur 4: zeigt eine schematische Darstellung noch einer weiteren Ausführungsform eines Systems aus einer Induktionsladevorrichtung und einer mobilen elektri- schen Vorrichtung.

### Detaillierte Beschreibung der Figuren

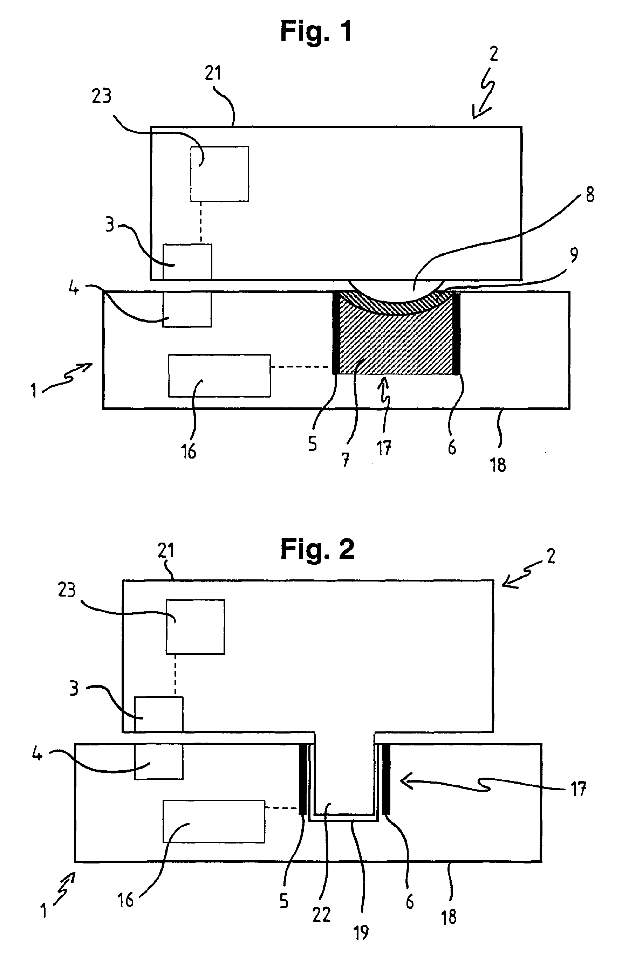

Gleiche Elemente sind in den verschiedenen Ausführungsformen aus Figuren 1 bis 4 mit gleichen Bezugszeichen bezeichnet.

Figur 1 zeigt eine schematische Darstellung der Induktionsladevorrichtung 1 und der mobilen elektrischen Vorrichtung 2. In dem Gehäuse 18 der Induktionsladevorrichtung 1 ist eine erste Spule 4 zur Energieübertragung angeordnet, die einer zweiten Spule 3 zur Energieübertragung gegenüberliegt, die in der mobilen elektrischen Vorrichtung 2 angeordnet ist.

Figur 1 zeigt die mobile elektrische Vorrichtung 2 in einer Ladeposition in Bezug auf die Induktionsladevorrichtung 1, wobei in dieser Position die Spulen 3 und 4 so angeordnet sind, dass sie miteinander gekoppelt sind und im Betrieb der Vorrichtung eine Energieübertragung von der Induktionsladevorrichtung 1 zu der mobilen elektrischen Vorrichtung 2 ermöglichen.

Die mobile elektrische Vorrichtung 2, in den in den Figuren 1 bis 4 dargestellten Ausführungsformen eine elektrische Zahnbürste, verfügt über einen mit der Spule 3 verbundenen Akkumulator 23 zur Speicherung der elektrischen Energie.

In der Induktionsladevorrichtung 2 ist ein Kondensator 17 angeordnet, der zwei Elektroden 5 und 6 aufweist. Zwischen den Elektroden 5 und 6 ist ein komprimierbares Dielektrikum 7 angeordnet. In Abhängigkeit von seiner Dichte ändert sich die Dielektrizitätskonstante des Dielektrikums 7 und damit die Kapazität des Kondensators 17. Um eine Kompression des Dielektrikums 7 zu ermöglichen, weist das Gehäuse 18 der Induktionsladevorrichtung 1 eine Weichstelle 9 auf, welche auf Druck von außen verformbar ist.

Die mobile elektrische Vorrichtung 2 wiederum verfügt über einen vorspringenden Gehäuseabschnitt 8 des Gehäuses 21, der in der dargestellten Ladeposition mit der Weichstelle 9 des Gehäuses 18 der Induktionsladevorrichtung 1 in Eingriff tritt und diese eindrückt. Durch das Eindrücken der Weichstelle 9 wird das unmittelbar unter der Weichstelle 9 befindliche Dielektrikum 7 des Kondensators 17 komprimiert und ändert seine Kapazität. Das Dielektrikum 7 liegt auf seiner der mobilen elektrischen Vorrichtung 2 abgewandten Seite an einem Widerlager an, um eine Kompression zu ermöglichen.

Eine mit dem Kondensator 17 verbundene Steuerung 6 erfasst die Änderung der Kapazität gegenüber einem Zustand, in dem die elektrische Zahnbürste 2 nicht in der Ladeposition aufgenommen ist, und schaltet die Ladetätigkeit nur dann ein, wenn die Zahnbürste 2 in der Ladeposition angeordnet ist.

Alternativ könnte das Dielektrikum 7 durch einen Druck auf die Weichstelle 9 teilweise aus dem Volumen zwischen den Kondensatorplatten 5 und 6 des Kondensators herausgeschoben werden (in Figur 1 nicht dargestellt), wodurch sich die Kapazität des Kondensators 17 ebenfalls ändert. Das Herausschieben des Dielektrikums 7 kann insbesondere gegen eine Vorspannung (etwa durch eine Feder realisiert) erfolgen, sodass das Dielektrikum 7 nach Entfernen der elektrischen Zahnbürste 2 aus der Ladeposition wieder in seine Ursprungsposition zurück geschoben wird.

Um die Weichstelle 9 nicht zu beschädigen, ist der Gehäusevorsprung 8 als Kugelabschnitt ausgeführt.

Anders als in der nicht maßstäblichen Figur 1 dargestellt, erweist es sich als vorteilhaft, wenn der Abstand der Kondensatorplatten 5 und 6 im Vergleich zu ihrer lateralen Ausdehnung klein ist. Durch diese Auslegung steigt die Kapazität des Kondensators und ist dadurch besser messbar.

In Figur 2 ist eine Ausführungsform des Systems aus Induktionsladevorrichtung 1 und Zahnbürste 2 gezeigt, in der das Gehäuse 21 der elektrischen Zahnbürste 2 einen Gehäusevorsprung 22 aus einem Kunststoffmaterial aufweist, der sich, wenn sich wie dargestellt die Zahnbürste 2 in der Ladeposition befindet, in eine zu dem Vorsprung 22 komplementäre Ausnehmung bzw. Vertiefung 19 in dem Gehäuse 18 der Induktionsladevorrichtung 1 erstreckt. Die Vertiefung 19 und damit der Gehäusevorsprung 22 sind zwischen den Kondensatorplatten 5 und 6 der Induktionsladevorrichtung 1 angeordnet. Die Vertiefung 22 ist, wenn die mobile elektrische Vorrichtung 2 nicht zum Laden an der Induktionsladevorrichtung 1 aufgenommen ist, mit Luft gefüllt. Wird der Gehäusevorsprung 22 zwischen die Kondensatorplatten 5 und 6 in die Vertiefung 19 eingebracht, so ersetzt er die Luft, wodurch sich die Dielektrizitätskonstante des Kondensators 17 ändert. Das Einbringen des Gehäusevorsprungs 22 als Einrichtung 8 zur Änderung der Kapazität zwischen die Kondensatorplatten 5 und 6 ändert folglich auch dessen Kapazität.

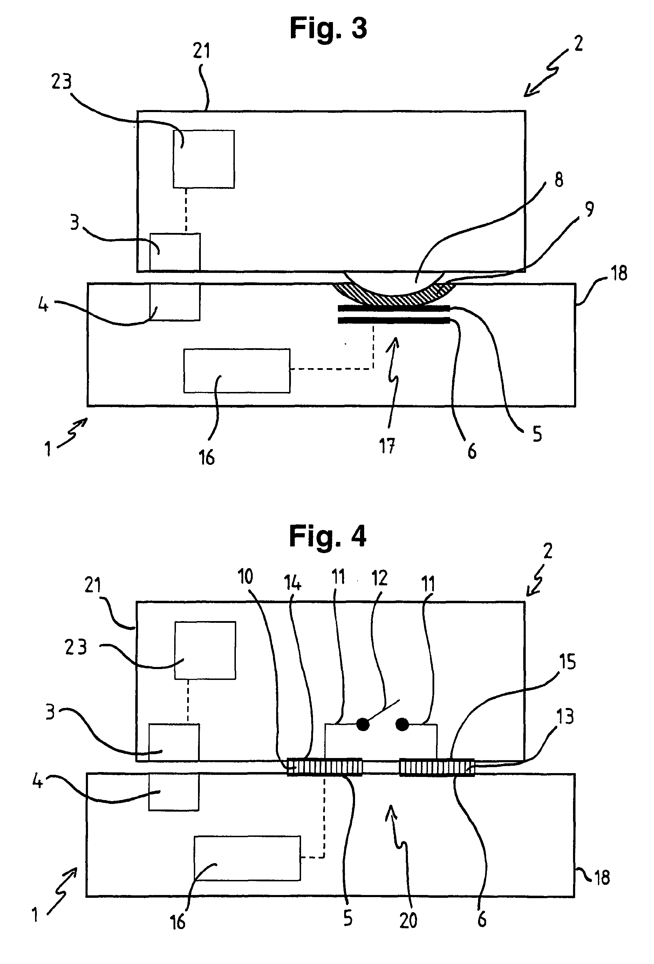

In Figur 3 ist eine weitere Ausführungsform der vorliegenden Erfindung gezeigt. Es wird nachfolgend wieder nur auf die Unterschiede zu der Ausführungsform aus Figur 1 eingegangen.

Auch Figur 3 zeigt an der Oberfläche des Gehäuses 18 der Induktionsladevorrichtung 1 eine Weichstelle 9, an deren Innenseite eine erste Elektrode 5 des Kondensators angebracht ist. Die zweite Elektrode 6 des Kondensators 17 ist weiter im Inneren des Gehäuses 18 der Induktionsladevorrichtung 1 angeordnet. Das Anordnen der elektrischen Zahnbürste 2 in der gezeigten Ladeposition führt dazu, dass eine Einrichtung zur Änderung der Kapazität, in Figur 3 wieder ein Gehäusevorsprung 8 wie in Figur 1, mechanisch auf die Weichstelle 9 drückt und diese elastisch ins Innere des Gehäuses 18 der Induktionsladevorrichtung verformt. Die Elektroden 5 und 6 nähern sich durch den Druck auf die Weichstelle 9 und damit auf die Elektrode 5 aneinander an und die Kapazität des Kondensators 17 wird erhöht.

Die Weichstelle 9 des Gehäuses 18 federt beim Entfernen der elektrischen Zahnbürste 2 wie auch bei der Ausführungsform aus Figur 1 in die Position vor der Belastung durch den Gehäusevorsprung 8 zurück. Die Federwirkung kann durch die Weichstelle selbst oder eine zusätzliche Feder (nicht gezeigt) bereitgestellt werden. Statt einer separaten Elektrode 5 kann die Elektrode 5 auch eine Membran aus Metall sein, welche die Weichstelle 9 selbst oder einen Teil von ihr bildet, beispielsweise eine metallische Beschichtung auf einer selbst nichtleitenden Weichstelle aus Kunststoff. Die Einrichtung zur Änderung der Kapazität bzw. der Gehäusevorsprung 8 ist vorzugsweise so geformt, dass er ohne scharfe Kanten auskommt, um die Weichstelle 9 nicht zu beschädigen.

In Figur 4 ist eine weitere Ausführungsform der Erfindung gezeigt. Es werden wie zuvor nur die Unterschiede zu Figur 1 beschrieben.

In dieser Ausführungsform ist der Kondensator der Induktionsladevorrichtung 1 als offener Plattenkondensator 20 ausgeführt. Ist die elektrische Zahnbürste 2 nicht in der dargestellten Ladeposition angeordnet, so verlaufen die Feldlinien ausgehend von der einen oder anderen Elektrode 5 oder 6 im Wesentlichen halbkreisförmig zu der korrespondierenden Elektrode 6 oder 5.

Die elektrische Zahnbürste 2 weist in dieser Ausführungsform eine kapazitive Kurzschlusseinrichtung aus zwei plattenförmigen Elektroden 14, 15, die über eine Verbindungsleitung 11 miteinander verbunden sind, auf. Wird nun, wie es die Figur 4 zeigt, die elektrische Zahnbürste 2 in die Ladeposition gebracht, so bilden sich elektrische Felder 10 und 13 von den Elektroden 5, 6 des Kondensators 20 der Induktionsladevorrichtung 1 zu den Elektroden 14 und 15 der elektrischen Zahnbürste 2 aus. Die Elektroden 5 und 14 sowie 6 und 15 sind in der gezeigten Ladeposition einander gegenüberliegend angeordnet. Die Kapazität des Kondensators 20 ändert sich dadurch sprunghaft und die Kapazitätsänderung ist als Zeichen für die Anwesenheit der Zahnbürste 2 in der Ladeposition erfassbar.

Die Elektroden 14 und 15 der kapazitiven Kurzschlusseinrichtung der elektrischen Zahnbürste 2 sind über eine Verbindungsleitung 11 miteinander verbunden, wobei die Verbindungsleitung 11 durch einen Schalter 12 unterbrochen werden kann. Durch automatisiertes Betätigen des Schalters 12 kann ein Signal von der mobilen elektrischen Vorrichtung 2 an die Induktionsladevorrichtung 1 übertragen werden. An die Elektroden 5 und 6 des offenen Plattenkondensators der Induktionsladevorrichtung 1 wird dazu entweder eine Wechselspannung angelegt und der Stromfluss oder die Spannung zwischen den Elektroden 5 und 6 wird gemessen, wobei die Wechselspannung vorteilhaft eine höhere Frequenz als die Datenrate der Informationen hat, die durch den Schalter 12 digital kodiert werden, oder der Kondensator aus den Elektroden 5 und 6 ist an eine Kapazitätsmessschaltung angeschlossen, wobei vorteilhaft deren Messdynamik höher als die Datenrate ist.

Im Weiteren werden weitere Anordnungen beschrieben, mit denen eine Induktionsladevorrichtung erkennen kann, ob sich eine mobile elektrische Vorrichtung in der Ladeposition befindet.

Eine solche Anordnung kann etwa ein System sein, bei dem sowohl der Sender als auch der Empfänger von optischen Signalen in der Induktionsladevorrichtung angeordnet ist. Die mobile elektrische Vorrichtung weist einen Reflektor auf, der im Falle der Anwesenheit der mobilen elektrischen Vorrichtung das Signal von dem Sender auf den Reflektor zurückwirft. Der Reflektor kann als ebener Reflektor ausgebildet sein. Er ist, wenn die mobile elektrische Vorrichtung geladen wird, an einer Stelle an der mobilen elektrischen Vorrichtung gegenüber dem Grund einer Vertiefung in der Induktionsladevorrichtung zur Aufnahme der mobilen elektrischen Vorrichtung angeordnet. Alternativ kann der Reflektor an einer Stelle an der mobilen elektrischen Vorrichtung angeordnet sein, die einer der Seitenwände der Vertiefung gegenüberliegt, wenn sich die mobile elektrische Vorrichtung zum Laden in der Vertiefung befindet. Der Sender bzw. der Empfänger ist jeweils dem Reflektor gegenüberliegend in der Vertiefung angeordnet. Der Reflektor kann als Retroreflektor ausgebildet sein, sodass Empfänger und Sender in dem Fall nahe beieinander angeordnet sein können. In einer weiteren Ausführung sind Sender und Empfänger von optischen Signalen ebenfalls in der Induktionsladevorrichtung angeordnet, wobei das von dem Sender gesendete Licht in der mobilen elektrischen Vorrichtung in einen gebogenen Lichtleiter fällt, der das Licht um 180° umlenkt und zu der Induktionsladevorrichtung zurücksendet, wo der Empfänger so angeordnet ist, dass er von dem zurückgesendeten Licht bestrahlt wird. Zur Übermittlung des Ladezustands der mobilen elektrischen Vorrichtung können von einem optischen Sender in der mobilen elektrischen Vorrichtung entsprechende Informationen z. B. in einer Kodierung durch statische oder blinkende Lichtsignale übermittelt werden.

In einer weiteren Ausführung ist an der mobilen elektrischen Vorrichtung eine Farbmarkierung angebracht, die von einem Farberkennungssensor in der Induktionsladevorrichtung erfasst wird, wenn sich die mobile elektrische Vorrichtung in einer Ladeposition befindet.

In einer weiteren Ausführung zeigt eine Leuchtdiode an der mobilen elektrischen Vorrichtung deren Ladezustand an. Das ausgesendete Licht wird von einem Empfänger, der in der Induktionsladevorrichtung angeordnet ist, erfasst und signalisiert die Anwesenheit der mobilen elektrischen Vorrichtung in einer Ladeposition.

In einer weiteren Ausführung wird die Gewichtskraft der mobilen elektrischen Vorrichtung von einem piezoelektrischen Element oder mit einer Schaltmatte erfasst, die jeweils in der Induktionsladevorrichtung angeordnet sind.

Weiterhin kann die mobile elektrische Vorrichtung einen elektromagnetischen Transponder (RFID-Tag) aufweisen, der von einer Abfrageeinrichtung in der Induktionsladevorrichtung abgefragt wird. Eine Antwort von dem RFID-Tag zeigt an, dass sich die mobile elektrische Vorrichtung in ihrer Ladeposition befindet.

In einem System aus einer Induktionsladevorrichtung und einer mobilen elektrischen Vorrichtung, ist an der Induktionsladevorrichtung ein Ultraschallempfänger und an der mobilen elektrischen Vorrichtung ein Ultraschallsender angeordnet.

Dadurch kann von der Induktionsladevorrichtung überwacht werden, ob Ultraschallsignale von der mobilen elektrischen Vorrichtung gesendet werden. Das Ergebnis der Überwachung ist ein Signal, welches das Vorhandensein der mobilen elektrischen Vorrichtung in der Ladeposition anzeigt, wenn Ultraschallsignale empfangen werden. Die Signale können so kodiert werden, dass andere Ultraschallsignale das Signal nur mit geringer Wahrscheinlichkeit auslösen können. Über die Ultraschallverbindung kann die mobile elektrische Vorrichtung außerdem Daten an die Induktionsladevorrichtung senden. Die Kommunikation kann durch die Luft stattfinden. Sender und Empfänger können ein Piezomaterial als Wandler zwischen elektrischen Signalen und Ultraschallsignalen enthalten.

In einer weiteren Ausführungsform werden Ultraschallsignale von der mobilen elektrischen Vorrichtung auf einen Festkörper als Übertragungselement für Ultraschallsignale gekoppelt. Dieses Element berührt einen Empfänger oder ein weiteres Übertragungselement für Ultraschall, das einen Teil der Induktionsladevorrichtung bildet und mit einem Ultraschallempfänger so verbunden ist, dass der Ultraschall auf ihn übertragen wird. Wird die mobile elektrische Vorrichtung in Ladeposition gebracht, so stellt dieser Vorgang eine Verbindung zwischen der mobilen elektrischen Vorrichtung und der Induktionsladevorrichtung für Ultraschallsignale über die genannten Elemente her. Der Ultraschall wird dann über Festkörperschall übertragen. Vorteilhaft ist die Verbindung für Ultraschallsignale zwischen dem Ultraschallsender und dem Ultraschalldetektor so steif und/oder dämpfungsarm ausgeführt, insbesondere an der Verbindungsstelle, die beim Wegnehmen der mobilen elektrischen Vorrichtung aus einer Ladeposition getrennt wird, dass der Empfang von Ultraschallsignalsignalen an dem Empfänger möglich ist.

Eine Induktionsladevorrichtung und eine mobile elektrische Vorrichtung kann mit einem zusätzlichen Paar von korrespondierenden Spulen ausgestattet sein. Über diese Spulen kann ein Signal von der mobilen elektrischen Vorrichtung an die Induktionsladevorrichtung gesendet werden, die anzeigt, dass sich die mobile elektrische Vorrichtung in einer Ladeposition befindet. Außerdem kann über die korrespondierenden Spulen Information in beide Richtungen übertragen werden. Das zusätzliche Paar von Spulen wird vorzugsweise mit einer anderen Frequenz als die Energieübertragung betrieben, sodass es nicht zu Störungen kommt. Vorteilhaft ist die Frequenz der zusätzlichen Spulen gerade kein ganzzahliges Vielfaches oder ein Bruchteil mit einem kleinen ganzzahligen Teiler, wie die etwa die Hälfte, ein Drittel, ein Viertel, ein Fünftel usw. der Frequenz der Energieübertragung.

In einer weiteren Anordnung ist in der Induktionsladevorrichtung zusätzlich zu der Spule zur Energieübertragung eine separate Spule angeordnet. In der mobilen elektrischen Vorrichtung ist ein Material angeordnet, mit dem die Induktivität der separaten Spule verändert werden kann, z. B. ein Ferritkern. Die Spule ist vorzugsweise in der Induktionsladevorrichtung so angeordnet, dass der Ferritkern oder dergleichen sich in der Nähe der Spule befindet, wenn die mobile elektrische Vorrichtung in einer Ladeposition angeordnet ist. Statt eines Ferritkerns kann auch ein anderes ferromagnetisches, insbesondere weichmagnetisches Material verwenden werden, z. B. Eisen, Stahl, Nickel oder Kobalt oder eine Legierung mit einem dieser Materialien.

Die separate Spule kann mit einer Messelektronik auch so ausgelesen werden, dass die Auswertungsschaltung auf Energieverluste durch Wirbelströme außerhalb der Spule reagiert. Dies ist Stand der Technik für Metalldetektoren. In oder an der mobilen elektrischen Vorrichtung kann ein Stück Metall oder ein anderes elektrisch leitfähiges Material angeordnet werden, das, wenn sich die mobile elektrische Vorrichtung in einer Ladeposition befindet, sich in einem Bereich befindet, in dem die separate Spule Wirbelströme in dem leitfähigen Material auslöst.

In der Induktionsladevorrichtung kann ein Saturationskernmagnetometer angeordnet sein, wobei in der mobilen elektrischen Vorrichtung ein Material mit einer signifikanten Remanenzinduktion, z.B. ein Dauermagnetmaterial, angeordnet ist. Vorteilhaft ist das Material mit der Remanenzinduktion im Erfassungsbereich des Saturationskernmagnetometers angeordnet, sodass Signaländerungen an diesem das Vorhandensein der mobilen elektrischen Vorrichtung in einer Ladeposition zeigen. In einer Ausführung ist in dem mobilen Gerät eine Spule angeordnet, die ein Magnetfeld erzeugt. Dieses Magnetfeld wird vorteilhaft von dem Saturationskernmagnetometer oder auch mit einer Hall-Sonde gemessen. Vorteilhaft kann durch Variation der Stärke des Magnetfeldes Information von der mobilen elektrischen Vorrichtung an die Induktionsladevorrichtung übertragen werden. Die Informationen liegen vorteilhaft als digitale Daten an dem Saturationskernmagnetometer oder der Hall-Sonde an.

In einer weiteren Induktionsladevorrichtung ist in der Induktionsladevorrichtung eine separate Spule mit einem beweglichen Kern angeordnet, der durch das Gewicht der mobilen elektrischen Vorrichtung, wenn sich diese in einer Ladeposition befindet, bewegt wird und die separate Spule verstimmt. Diese Verstimmung kann mit einem entsprechenden Empfängerkreis erfasst werden und als Signal für die Anwesenheit der mobilen elektrischen Vorrichtung in einer Ladeposition dienen.

In einer weiteren Vorrichtung ist in der Induktionsladevorrichtung ein mechanischer Schalter angeordnet, der durch das Gewicht der mobilen elektrischen Vorrichtung betätigt wird, wenn sich diese in einer Ladeposition befindet. Der Schalter kann sich unter einer Weichstelle an der Oberfläche der Induktionsladevorrichtung befinden, wobei die Weichstelle bei Betätigung des Schalters verformt wird. Der elektrische Schalter schaltet die Energieübertragung ein, wenn sich die mobile elektrische Vorrichtung in einer Ladeposition befindet, und schaltet die Energieübertragung aus, wenn sich die mobile elektrische Vorrichtung nicht in einer Ladeposition befindet. Die Wirkung der Gewichtskraft der mobilen elektrischen Vorrichtung kann verstärkt werden, indem der Schalter in der Wand einer keil- oder kegelförmigen Kraftverstärkungsvorrichtung angeordnet ist, in die ein entsprechender Gegenkeil, der einen Teil der mobilen elektrischen Vorrichtung bildet, eingesetzt wird. Dies erhöht auch die Sicherheit dagegen, dass er bei Erschütterungen unbeabsichtigt ausgelöst wird.

Die Induktionsladevorrichtung kann eine Weichstelle an ihrer Oberfläche aufweisen, durch die die Gewichtskraft der mobilen elektrischen Vorrichtung auf einen Dehnmessstreifen übertragen wird, der im Inneren der Induktionsladevorrichtung angeordnet ist. Durch die Änderung der Eigenschaften des Dehnmessstreifens kann die Anwesenheit der mobilen elektrischen Vorrichtung an der Induktionsladevorrichtung erfasst werden.

In einer anderen Ausführung findet sich in der mobilen elektrischen Vorrichtung ein Kondensator, der mit einer Spule, die ebenfalls in der mobilen elektrischen Vorrichtung angeordnet ist, einen Schwingkreis bildet, wobei die Spule mit einer zweiten Spule in der Induktionsladevorrichtung magnetisch zusammenwirkt. Die Spule in der Induktionsladevorrichtung ist in einen Schwingkreis eingebunden. Der Kondensator in der mobilen elektrischen Vorrichtung ist so ausgelegt und angeschlossen, dass er den Schwingkreis in der Induktionsladevorrichtung so beeinflusst, dass dieser nicht mehr schwingt. Durch die Beendigung der Schwingung kann in der Induktionsladevorrichtung festgestellt werden, ob sich die mobile elektrische Vorrichtung in der Ladeposition befindet. Vorteilhaft ist die Wirkung des Kondensators in der mobilen elektrischen Vorrichtung schaltbar, sodass durch Betätigen der entsprechenden Schaltfunktion Daten durch Ein- und Ausschalten des Oszillators in der Induktionsladevorrichtung übertragen werden können.

### Bezugszeichenliste

- 1: Induktionsladevorrichtung
- 2: elektrische Zahnbürste
- 3: Spule der Induktionsladevorrichtung
- 4: Spule der elektrischen Zahnbürste
- 5: erste Elektrode des Kondensators der Induktionsladevorrichtung
- 6: zweite Elektrode des Kondensators der Induktionsladevorrichtung
- 7: Dielektrikum
- 8: Einrichtung zur Änderung der Kapazität
- 9: Dünnstelle
- 10: elektrisches Feld
- 11: Verbindungsleitung
- 12: Schalter
- 13: elektrisches Feld
- 14: erste Elektrode der kapazitiven Kurzschlusseinrichtung
- 15: zweite Elektrode der kapazitiven Kurzschlusseinrichtung
- 16: Steuerung
- 17: Kondensator
- 18: Gehäuse der Induktionsladevorrichtung
- 19: Vertiefung in dem Gehäuse der Induktionsladevorrichtung
- 20: offener Plattenkondensator
- 21: Gehäuse der mobilen elektrischen Vorrichtung
- 22: Gehäusevorsprung des Gehäuses 21
- 23: Akkumulator

## Patentansprüche

1. Induktionsladevorrichtung (1) zum Laden eines Energiespeichers (23) einer mobilen elektrischen Vorrichtung (2) mit
einer Spule (4) zur Energieübertragung und
einer Steuerung (16) für die Energieübertragung,
**dadurch gekennzeichnet, dass**
die Steuerung (16) mit einem Kondensator (17, 20) mit einer veränderbaren Kapazität verbunden ist, wobei der Kondensator (17, 20) so eingerichtet ist, dass sich seine Kapazität in Abhängigkeit davon ändert, ob die mobile elektrische Vorrichtung (2) in einer Ladeposition angeordnet ist oder nicht.

2. Induktionsladevorrichtung (1) nach Anspruch 1, **dadurch gekennzeichnet, dass** der Kondensator (17, 20) mindestens zwei Elektroden (5, 6) aufweist, wobei sich zwischen den Elektroden (5, 6) zumindest abschnittsweise ein Dielektrikum (7) erstreckt, dessen Dielektrizitätskonstante durch Ausüben einer Kraft oder Einwirken eines Feldes auf das Dielektrikum (7) veränderbar ist, wobei die Kraft oder das Feld davon abhängt, ob die mobile elektrische Vorrichtung (2) in der Ladeposition angeordnet ist oder nicht.

3. Induktionsladevorrichtung (1) nach einem der vorangehenden Ansprüche, **dadurch gekennzeichnet, dass** der Kondensator (17) mindestens zwei Elektroden (5, 6) aufweist, wobei sich zwischen den Elektroden (5, 6) zumindest abschnittsweise ein Dielektrikum (7) erstreckt, wobei das Dielektrikum (7) zumindest abschnittsweise austauschbar ist, wobei das Dielektrikum (7), das sich zwischen den Elektroden (5, 6) befindet, davon abhängt, ob die mobile elektrische Vorrichtung (2) in der Ladeposition angeordnet ist oder nicht.

4. Induktionsladevorrichtung (1) nach einem der vorangehenden Ansprüche, **dadurch gekennzeichnet, dass** der Kondensator (17) mindestens zwei Elektroden (5, 6) aufweist, deren relative Lage zueinander und/oder deren Form veränderbar ist, wobei die relative Lage und/oder Form davon abhängt, ob die mobile elektrische Vorrichtung (2) in der Ladeposition angeordnet ist oder nicht.

5. Induktionsladevorrichtung (1) nach einem der vorangehenden Ansprüche, **dadurch gekennzeichnet, dass** sie ein Gehäuse (18) aufweist, wobei der Kondensator (17) mit mindestens zwei Elektroden (5, 6) und einem Dielektrikum in dem Gehäuse angeordnet ist und wobei das Gehäuse (18) einen verformbaren Abschnitt (9) aufweist, der es ermöglicht, von außen eine Kraft auf das Dielektrikum (7) oder auf zumindest eine der Elektroden (5, 6) auszuüben.

6. Induktionsladevorrichtung (1) nach einem der vorangehenden Ansprüche, **dadurch gekennzeichnet, dass** sie ein Gehäuse (18) aufweist, wobei der Kondensator (17) mit mindestens zwei Elektroden (5, 6) in dem Gehäuse angeordnet ist, wobei das Gehäuse (18) so ausgebildet ist, dass zwischen den Elektroden (5, 6) eine von außen zugängliche Vertiefung (19) vorgesehen ist, in die ein Abschnitt einer mobilen elektrischen Vorrichtung (2) einbringbar ist.

7. Induktionsladevorrichtung (1) nach einem der vorangehenden Ansprüche, **dadurch gekennzeichnet, dass** sie ein Gehäuse (18) aufweist, wobei der Kondensator als offener Plattenkondensator (19) mit mindestens zwei Elektroden (5, 6) ausgebildet ist, wobei sich im Betrieb der Vorrichtung das elektrische Feld des Kondensators (19) zumindest teilweise außerhalb des Gehäuses erstreckt.

8. Induktionsladevorrichtung (1) einem der vorangehenden Ansprüche, **dadurch gekennzeichnet, dass** die Steuerung (16) so eingerichtet ist, dass sie im Betrieb der Vorrichtung die Kapazität des Kondensators (17, 20) erfasst und die Energieübertragung in Abhängigkeit von der Kapazität des Kondensators (17, 20) steuert.

9. System mit einer Induktionsladevorrichtung (1) nach einem der Ansprüche 1 bis 8 und einer mobilen elektrischen Vorrichtung (2), wobei die mobile elektrische Vorrichtung (2) eine Spule (3) zur Energieübertragung und einen mit der Spule verbundenen Energiespeicher (23) aufweist, wobei die mobile elektrische Vorrichtung (2) so in einer Ladeposition positionierbar ist, dass mithilfe der Spulen (3, 4) Energie von der Induktionsladevorrichtung (1) zu dem Energiespeicher (23) der mobilen elektrischen Vorrichtung (2) übertragbar ist und wobei die mobile elektrische Vorrichtung (2) eine Einrichtung (8, 14, 15) aufweist, die die Kapazität des Kondensators (17, 19) der Induktionsladevorrichtung (1) in Abhängigkeit davon ändert, ob die mobile elektrische Vorrichtung (2) in der Ladeposition angeordnet ist oder nicht.

10. System nach Anspruch 9, **dadurch gekennzeichnet, dass** die mobile elektrische Vorrichtung (2) ein Gehäuse (21) aufweist, wobei die Einrichtung zur Änderung der Kapazität ein Abschnitt (8) des Gehäuses (21) ist, der, wenn die mobile elektrische Vorrichtung (2) in der Ladeposition angeordnet ist, mit dem flexiblen Abschnitt (9) des Gehäuses (18) der Induktionsladevorrichtung (1) in Eingriff tritt und eine Kraft auf zumindest eine Elektrode (5, 6) oder ein Dielektrikum (7) des Kondensators (17) ausübt.

11. System nach Anspruch 9 oder 10, **dadurch gekennzeichnet, dass** die mobile elektrische Vorrichtung (2) ein Gehäuse (21) aufweist, wobei die Einrichtung zur Änderung der Kapazität ein Abschnitt (22) des Gehäuses (21) ist, der, wenn die Induktionsladevorrichtung (2) in der Ladeposition angeordnet ist, in eine Vertiefung (19) in dem Gehäuse (18) der Induktionsladevorrichtung (1) eingreift.

12. System nach einem der vorgehenden Ansprüche, **dadurch gekennzeichnet, dass** die mobile elektrische Vorrichtung (2) ein Gehäuse (21) aufweist, wobei die Einrichtung zur Änderung der Kapazität ein Abschnitt des Gehäuses (21) ist, der sich, wenn die Induktionsladevorrichtung (2) in der Ladeposition angeordnet ist, im Feld des Kondensators (17, 20) befindet.

13. System Anspruch 7, **dadurch gekennzeichnet, dass** die Einrichtung zur Änderung der Kapazität einen elektrisch leitfähigen Materialabschnitt als kapazitive Kurzschlusseinrichtung (11, 12, 14, 15) für ein elektrisches Feld (10) des Kondensators (20) der Induktionsladevorrichtung (1) aufweist.

14. Verfahren zum Laden eines Energiespeichers (23) einer mobilen elektrischen Vorrichtung (2) mittels einer Induktionsladevorrichtung (1) mit einer Steuerung (16) für die Energieübertragung, **dadurch gekennzeichnet, dass** die Induktionsladevorrichtung (1) in einem ersten Schritt die Kapazität eines Kondensators (17, 20) der Induktionsladevorrichtung (1), die vom Vorhandensein der mobilen elektrischen Vorrichtung (2) in der Umgebung der Induktionsladeeinrichtung (1) abhängt, erfasst, das Messergebnis in einem zweiten Schritt mit einem Schwellenwert vergleicht und in einem dritten Schritt in Abhängigkeit des Ergebnisses des Vergleichs die Energieübertragung zwischen einer Spule (4) der Induktionsladevorrichtung (1) und der mobilen elektrischen Vorrichtung (2) aktviert oder deaktiviert.

## Geänderte Patentansprüche

### Geänderte Patentansprüche gemäss Regel 137(2) EPÜ.

**1.** Induktionsladevorrichtung (1) zum Laden eines Energiespeichers (23) einer elektrischen Zahnbürste (2) mit
einer Spule (4) zur Energieübertragung und
einer Steuerung (16) für die Energieübertragung,
**dadurch gekennzeichnet, dass**
die Steuerung (16) mit einem Kondensator (17, 20) mit einer veränderbaren Kapazität verbunden ist, wobei der Kondensator (17, 20) so eingerichtet ist, dass die Kapazität von der elektrischen Zahnbürste beeinflussbar ist, sodass die Anwesenheit der elektrischen Zahnbürste in einer Ladeposition oder ihr Fehlen detektierbar ist, wobei der Kondensator (17, 20) mindestens zwei Elektroden (5, 6) aufweist und sich zwischen den Elektroden (5, 6) zumindest abschnittsweise ein Dielektrikum (7) erstreckt, dessen Dielektrizitätskonstante durch Ausüben einer Kraft oder Einwirken eines Feldes auf das Dielektrikum (7) veränderbar ist, wobei die Kraft oder das Feld davon abhängt, ob die elektrische Zahnbürste (2) in der Ladeposition angeordnet ist oder nicht.

**2.** Induktionsladevorrichtung (1) nach einem der vorangehenden Ansprüche, **dadurch gekennzeichnet, dass** der Kondensator (17) mindestens zwei Elektroden (5, 6) aufweist, wobei sich zwischen den Elektroden (5, 6) zumindest abschnittsweise ein Dielektrikum (7) erstreckt, wobei das Dielektrikum (7) zumindest abschnittsweise austauschbar ist, wobei das austauschbare Dielektrikum (7), das sich zwischen den Elektroden (5, 6) befindet, durch einen Abschnitt des Gehäuses der elektrischen Zahnbürste (2) in der Ladeposition zumindest abschnittsweise ersetzt wird.

**3.** Induktionsladevorrichtung (1) nach einem der vorangehenden Ansprüche, **dadurch gekennzeichnet, dass** der Kondensator (17) mindestens zwei Elektroden (5, 6) aufweist, deren relative Lage zueinander und/oder deren Form veränderbar ist, wobei die relative Lage und/oder Form davon abhängt, ob die mobile elektrische Vorrichtung (2) in der Ladeposition angeordnet ist oder nicht.

**4.** Induktionsladevorrichtung (1) nach einem der vorangehenden Ansprüche, **dadurch gekennzeichnet, dass** die Induktionsladevorrichtung ein Gehäuse (18) aufweist, wobei der Kondensator (17) mit mindestens zwei Elektroden (5, 6) und einem Dielektrikum in dem Gehäuse angeordnet ist und wobei das Gehäuse (18) einen verformbaren Abschnitt (9) aufweist, der es ermöglicht, von außen eine Kraft auf das Dielektrikum (7) oder auf zumindest eine der Elektroden (5, 6) auszuüben.

**5.** Induktionsladevorrichtung (1) nach einem der vorangehenden Ansprüche, **dadurch gekennzeichnet, dass** die Induktionsladevorrichtung ein Gehäuse (18) aufweist, wobei der Kondensator (17) mit mindestens zwei Elektroden (5, 6) in dem Gehäuse angeordnet ist, wobei das Gehäuse (18) so ausgebildet ist, dass zwischen den Elektroden (5, 6) eine von außen zugängliche Vertiefung (19) vorgesehen ist, in die ein Abschnitt einer mobilen elektrischen Vorrichtung (2) einbringbar ist.

**6.** Induktionsladevorrichtung (1) nach einem der vorangehenden Ansprüche, **dadurch gekennzeichnet, dass** die Induktionsladevorrichtung ein Gehäuse (18) aufweist, wobei der Kondensator als offener Plattenkondensator (19) mit mindestens zwei Elektroden (5, 6) ausgebildet ist, wobei sich im Betrieb der Vorrichtung das elektrische Feld des Kondensators (19) zumindest teilweise außerhalb des Gehäuses erstreckt.

**7.** Induktionsladevorrichtung (1) einem der vorangehenden Ansprüche, **dadurch gekennzeichnet, dass** die Steuerung (16) so eingerichtet ist, dass die Steuerung (16) im Betrieb der Vorrichtung die Kapazität des Kondensators (17, 20) erfasst und die Energieübertragung in Abhängigkeit vom Überschreiten oder Unterschreiten eines Schwellenwertes der Kapazität des Kondensators (17, 20) steuert.

**8.** System mit einer Induktionsladevorrichtung (1) nach einem der Ansprüche 1 bis 7 und einer elektrischen Zahnbürste (2), wobei die elektrische Zahnbürste (2) eine Spule (3) zur Energieübertragung und einen mit der Spule verbundenen Energiespeicher (23) aufweist, wobei die elektrische Zahnbürste (2) so in einer Ladeposition positionierbar ist, dass mithilfe der Spulen (3, 4) Energie von der Induktionsladevorrichtung (1) zu dem Energiespeicher (23) der elektrische Zahnbürste (2) übertragbar ist und wobei die elektrische Zahnbürste (2) eine Einrichtung (8, 14, 15) aufweist, die die Kapazität des Kondensators (17, 19) der Induktionsladevorrichtung (1) in Abhängigkeit davon ändert, ob die mobile elektrische Vorrichtung (2) in der Ladeposition angeordnet ist oder nicht.

**9.** System nach Anspruch 8, **dadurch gekennzeichnet, dass** die elektrische Zahnbürste (2) ein Gehäuse (21) aufweist, wobei die Einrichtung zur Änderung der Kapazität ein Abschnitt (8) des Gehäuses (21) ist, der, wenn die elektrische Zahnbürste (2) in der Ladeposition angeordnet ist, mit einem flexiblen Abschnitt (9) des Gehäuses (18) der Induktionsladevorrichtung (1) in Eingriff tritt und eine Kraft auf zumindest eine Elektrode (5, 6) oder ein Dielektrikum (7) des Kondensators (17) ausübt.

**10.** System nach Anspruch 8 oder 9, **dadurch gekennzeichnet, dass** die elektrische Zahnbürste (2) ein Gehäuse (21) aufweist, wobei die Einrichtung zur Änderung der Kapazität ein Abschnitt (22) des Gehäuses (21) ist, der, wenn die Induktionsladevorrichtung (2) in der Ladeposition angeordnet ist, in eine Vertiefung (19) in dem Gehäuse (18) der Induktionsladevorrichtung (1) eingreift.

**11.** System nach einem der vorgehenden Ansprüche, **dadurch gekennzeichnet, dass** die elektrische Zahnbürste (2) ein Gehäuse (21) aufweist, wobei die Einrichtung zur Änderung der Kapazität ein Abschnitt des Gehäuses (21) ist, der sich, wenn die Induktionsladevorrichtung (2) in der Ladeposition angeordnet ist, im Feld des Kondensators (17, 20) befindet.

**12.** System nach Anspruch 8, **dadurch gekennzeichnet, dass** die Einrichtung zur Änderung der Kapazität einen elektrisch leitfähigen Materialabschnitt als kapazitive Kurzschlusseinrichtung (11, 12, 14, 15) für ein elektrisches Feld (10) des Kondensators (20) der Induktionsladevorrichtung (1) aufweist.

**13.** Verfahren zum Laden eines Energiespeichers (23) einer elektrische Zahnbürste (2) mittels einer Induktionsladevorrichtung (1) mit einer Steuerung (16) für die Energieübertragung, **dadurch gekennzeichnet, dass** die Induktionsladevorrichtung (1) in einem ersten Schritt die Kapazität eines Kondensators (17, 20) der Induktionsladevorrichtung (1), die vom Vorhandensein der elektrische Zahnbürste (2) in der Umgebung der Induktionsladeeinrichtung (1) abhängt, erfasst, das Messergebnis in einem zweiten Schritt mit einem Schwellenwert vergleicht und in einem dritten Schritt in Abhängigkeit des Ergebnisses des Vergleichs die Energieübertragung zwischen einer Spule (4) der Induktionsladevorrichtung (1) und der elektrische Zahnbürste (2) aktiviert oder deaktiviert.
